# EUROPEAN PATENT APPLICATION

(11) **EP 4 772 999 A1**
(43) Date of publication of application: **08.07.2026**
(21) Application number: 25221096.8
(22) Date of filing: 05.12.2025
(51) Int. Cl.: G06F 9/30, G06F 9/38, G06F 9/46

(54) **COMPUTING DEVICE, OPERATING METHOD THEREOF, AND STORAGE SYSTEM FOR SWITCHING CONTEXT**

(30) Priority: 02.01.2025 KR 20250000460
(71) Applicant: Samsung Electronics Co., Ltd., Suwon-si, Gyeonggi-do 16677 (KR)
(72) Inventor: KIM, Jongmin, 16677 Suwon-si (KR); KANG, Donggil, 16677 Suwon-si (KR); KIM, Yoonsoo, 16677 Suwon-si (KR); JEONG, Myunggwan, 16677 Suwon-si (KR); CHO, Kyungjune, 16677 Suwon-si (KR); CHO, Youngjin, 16677 Suwon-si (KR)
(74) Representative: Marks & Clerk LLP

(57) **Abstract**

A computing device includes processors (120), and a context switch (110) including data structure modules (111) to store context including a start address of a thread and a value related to the thread. In an idle state, the processors (120) load a first context for a first thread from a corresponding data structure module, in synchronization with a first cycle of a clock signal, in an active state, the processors (120) process the first thread based on the first context, and in the active state, the processors (120) provide a second context for a second thread that is subsequent to the first thread and that is to be processed in parallel with the first thread to the context switch (110), to store the second context in a subsequent data structure module among the data structure modules (111) in the context switch (110), the subsequent data structure module corresponding to a subsequent processor that is to process the second thread.

## Description

### BACKGROUND

The present disclosure relates to an electronic device, and more particularly, to a computing device, an operating method thereof, and a storage system for switching context between processors.

With the increase in the amount of information being processed in the computer technology fields, technologies for quickly processing the increased information are being developed and studied. Among such technologies, for example, processors which process information may process information in parallel by transmission/reception of context between the processors. However, with the exponential increase in the amount of information in threads, the time taken for each processor to process context has increased, the time taken for each processor to load various types of data, such as instruction data, from a memory has increased, and the time taken for one processor to transmit the context to another processor has also increased. In this regard, due to the increase in time taken to process operations, the performance of a high-speed processing system cannot be satisfied. Technology for increasing the number of registers included in a processor according to an increasing amount of threads and parallelizing the registers has been proposed, but there is a physical limit to the increase in the number of registers.

### SUMMARY

It is an aspect to provide a computing device, an operating method thereof, and a storage system for switching context, wherein the number of registers is reduced (in other words, does not require to be increased, or is relatively small), a time taken to switch the context is reduced, and a large amount of threads are processed.

According to an aspect of one or more embodiments, there is provided a computing device comprising a context switch including a plurality of data structure modules to store context including a start address of a thread and at least one value related to the thread; and a plurality of processors. The plurality of processors are configured to, in an idle state, load a first context for a first thread from a corresponding data structure module among the plurality of data structure modules, in synchronization with a first cycle of a clock signal; in an active state, process the first thread based on the first context; and in the active state, provide a second context for a second thread that is subsequent to the first thread and that is to be processed in parallel with the first thread to the context switch, to store the second context in a subsequent data structure module among the plurality of data structure modules in the context switch, the subsequent data structure module corresponding to a subsequent processor that is to process the second thread.

According to another aspect of one or more embodiments, there is provided an operating method of a computing device, the operating method comprising, in an idle state, loading, from a context switch to a first processor, a first context including a first start address of a first thread and at least one value related to the first thread, in synchronization with a first cycle of a clock signal; in an active state, processing the first thread based on the first context; and in the active state, transmitting, from the first processor to the context switch, a second context for a second thread that is subsequent to the first thread and that is to be processed in parallel with the first thread.

According to yet another aspect of one or more embodiments, there is provided a storage system comprising a host configured to output a request signal requesting that an operation be performed; and a storage device configured to, based on the request signal, perform the operation. The storage device comprises a context switch including a plurality of data structure modules to store context including a start address of a thread and values related to the thread; a first processor configured to, in an idle state, load a first context for a first thread from a first data structure module among the plurality of data structure modules in the context switch, in synchronization with a first cycle of a clock signal, in an active state, process the first thread based on the first context, and in the active state, output a second context for a second thread that is subsequent to the first thread to the context switch, to store the second context in a second data structure module among the plurality of data structure modules in the context switch; and a second processor configured to, in the idle state, load the second context from the second data structure module, in synchronization with a second cycle of the clock signal, and in the active state, process the second thread based on the second context.
At least some of the above and other features of the invention are set out in the claims.

### BRIEF DESCRIPTION OF THE DRAWINGS

Various embodiments will be more clearly understood from the following detailed description taken in conjunction with the accompanying drawings, in which:
FIG. 1 is a block diagram of a computing device according to an embodiment;
FIG. 2 is a diagram for describing a processing operation of a single processor and a parallel processing operation of multi-processors;
FIGS. 3A, 3B, 3C, and 3D are diagrams for describing an operation in which a processor processes a thread;
FIG. 4 is a diagram showing examples of context and a data structure module according to an embodiment;
FIG. 5 is a flowchart for storing context in a data structure module, according to an embodiment;
FIG. 6 is a flowchart for outputting context from a data structure module, according to an embodiment;
FIG. 7 is a diagram showing examples of a processor and a routed queue, according to an embodiment;
FIG. 8 is a diagram showing examples of a processor and a routed queue, according to an embodiment;
FIG. 9 is a diagram showing examples of a processor and a routed queue, according to an embodiment;
FIG. 10 is a flowchart for describing an operating method of a computing device, according to an embodiment; and
FIG. 11 is a block diagram of a host-storage system according to an embodiment.

### DETAILED DESCRIPTION

Hereinafter, various embodiments will be described in detail with reference to accompanying drawings.

Expressions such as "first", "second"; etc. used in the present specification modify various elements regardless of an order and/or importance, and are only used to distinguish one element from another element and do not limit the components. For example, a "first" user device and a "second" user device may represent different user devices regardless of an order or importance. For example, without departing from the scope of the rights described in the present specification, a "first" component may be referred to as a "second" component, and similarly, a "second" component may be referred to as a "first" component.

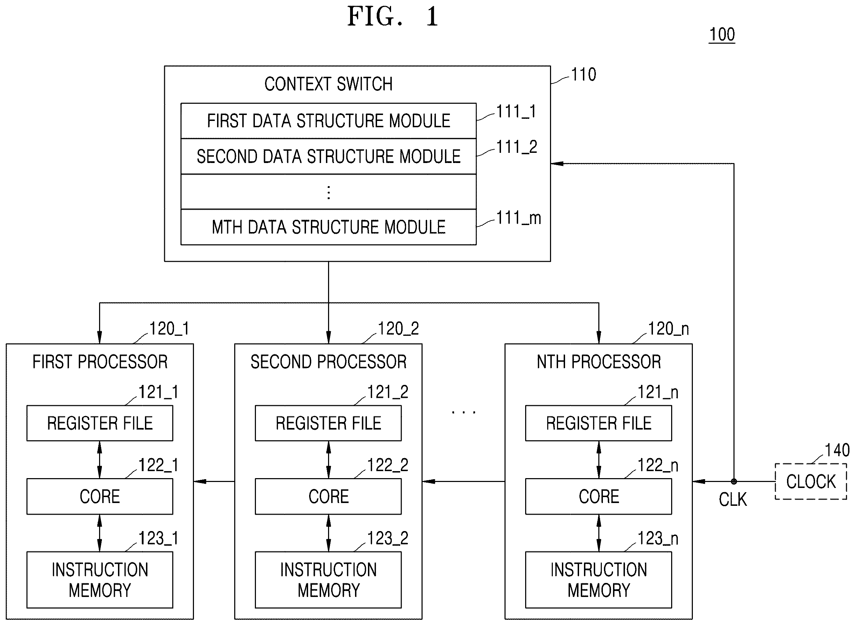

FIG. 1 is a block diagram of a computing device 100 according to an embodiment.

Referring to FIG. 1, the computing device 100 may include a context switch 110, and a first processor 120_1, a second processor 120_2, ..., to an nth processor 120_n. In some embodiments, the computing device 100 may further include a clock 140 configured to provide a clock signal CLK to the context switch 110 and the first to nth processors 120_1 to 120_n. The clock 140 may include, for example, an oscillator, a phase-locked loop, or the like. While three processors 120_1 to 120_n are illustrated in FIG. 1, this is only an example and, in some embodiments, the number of processors may be two or may be more than three. That is, in embodiments, n may be an integer of 2 or more.

The context switch 110 may be configured to switch context among the first to nth processors 120_1 to 120_n in response to the clock signal CLK (or in synchronization with the clock signal CLK). The context is information to be stored to resume execution of a specific process and may include various types of information for processing a thread of a process.

The context switch 110 may include a first data structure module 111_1, a second data structure module 111_2, ..., to an mth data structure module 111_m. While three data structure modules 111_1 to 111_m are illustrated in FIG. 1, this is only an example and, in some embodiments, the number of data structure modules may be two or may be more than three. That is, in embodiments, m may be an integer of 2 or more. In some embodiments, the number of data structure modules may correspond to the number of processors. Each of the first to mth data structure modules 111_1 to 111_m may temporarily store context to be performed by a corresponding processor and output the temporarily stored context according to a scheduled order. For example, the first data structure module 111_1 may store context to be performed by the first processor 120_1. The second data structure module 111_2 may store context to be performed by the second processor 120_2. In a similar manner, the mth data structure module 111_m may store context to be performed by the nth processor 120_n. In an embodiment, m and n may be the same.

In an embodiment, the first to mth data structure modules 111_1 to 111_m may include various types of data structures, such as a list, a stack, a queue, and a tree.

In an embodiment, each of the first to mth data structure modules 111_1 to 111_m may be implemented as a register file including a plurality of registers. The register file may also be referred to as a register bank or a register set. In the register file according to an embodiment, the plurality of registers may each be implemented as a flip flop configured to latch data in response to the clock signal CLK. However, embodiments are not limited to these examples.

Each of the first to nth processors 120_1 to 120_n may be configured to process a thread in response to the clock signal CLK (or in synchronization with the clock signal CLK). Operations of processing the thread may include an operation of fetching an instruction related to the thread, an operation of decoding or parsing an instruction, an operation of executing an instruction, and an operation of writing back an execution result.

The first to nth processors 120_1 to 120_n may be respectively assigned with the first to mth data structure modules 111_1 to 111_m. For example, the first processor 120_1 may be assigned with the first data structure module 111_1. The second processor 120_2 may be assigned with the second data structure module 111_2. In a similar manner, the nth processor 120_n may be assigned with the mth data structure module 111_m.

In embodiments, each of the first to nth processors 120_1 to 120_n may load, in an idle state, a context from a corresponding data structure module, in synchronization with one cycle of the clock signal CLK. Each of the first to nth processors 120_1 to 120_n may process, in an active state, a thread corresponding to the context, based on the context loaded in the idle state. When the processing of the thread corresponding to the context is completed, each of the first to nth processors 120_1 to 120_n may provide, in the active state, a subsequent context for a subsequent thread to be processed by a subsequent processor to the context switch 110 to store the subsequent context in a subsequent data module in the context switch that is assigned to the subsequent processor.

In embodiments, each of the first to nth processors 120_1 to 120_n may include a register file, a core, and an instruction memory. For example, the first processor 120_1 may include a register file 121_1, a core 122_1, and an instruction memory 123_1. The second processor 120_2 may include a register file 121_2, a core 122_2, and an instruction memory 123_2. In a similar manner, the nth processor 120_n may include a register file 121_n, a core 122_n, and an instruction memory 123_n.

The register files 121_1 to 121_n may receive contexts from the context switch 110. In an embodiment, the register file may receive a context, in synchronization with one cycle of the clock signal CLK and store the context therein. The register files 121_1 to 121_n may temporarily store at least one value processed by respective cores, respectively in synchronization with a plurality of cycles of the clock signal CLK. The register files 121_1 to 121_n may output, to the context switch 110, values stored in synchronization with one cycle of the clock signal CLK. In an embodiment, the register file may include a plurality of registers and each register may be implemented as a flip flop. However, embodiments are not limited to these examples.

The cores 122_1 to 122_n may process a thread according to a context, based on at least one piece of instruction data stored in a corresponding instruction memory and values stored in a corresponding register file. In an embodiment, the cores 122_1 to 122_n may each include, an arithmetic and logical unit (ALU), a controller, a multiplexer, a demultiplexer, a program counter, and/or a hardware accelerator.

The instruction memories 123_1 to 123_n may store at least one piece of instruction data related to each thread, an address of a storage area storing instruction data, and a start address of each thread. The instruction memories 123_1 to 123_n may provide, to a corresponding core, values stored therein in response to a control signal (e.g., a read control signal or a write control signal) of the corresponding core. In an embodiment, the instruction memories 123_1 to 123_n may be implemented as a an L1 cache connected and arranged closest to a processor and/or a core. However, embodiments are not limited to these examples.

According to the above embodiments, a time taken to process a large amount of threads may be reduced by reducing a time taken for context switching, and accordingly, a performance of the computing device 100 may be improved and overhead of the computing device 100 may be reduced.

Also, according to the above embodiments, the performance of the computing device 100 may be improved by reducing a penalty, such as latency, which may occur during the context switching.

Also, according to the above embodiments, manufacturing costs may be reduced because a context is switched and transmitted/received by using a register file instead of a memory such as static random-access memory (SRAM).

Also, according to the above embodiments, costs related to the register file may be reduced by using a relatively small number of register files (e.g., a single register file) without having to parallelize register files and increase the number of register files according to an increase in the amount/number of threads.

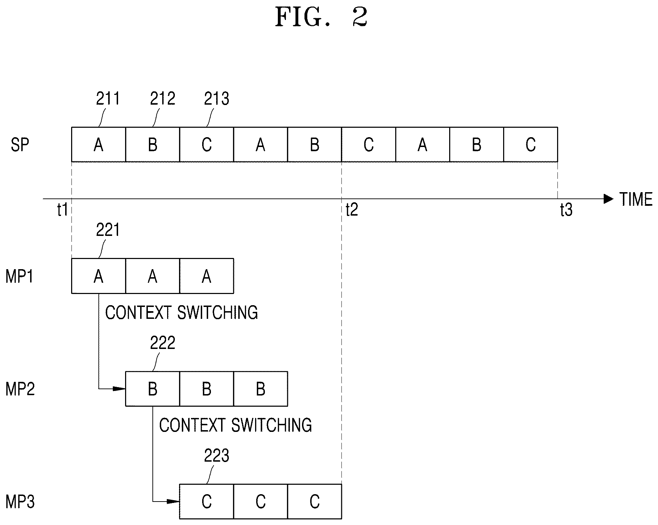

FIG. 2 is a diagram for describing a processing operation of a single processor SP and a parallel processing operation of multi-processors MP1, MP2, and MP3.

Referring to FIG. 2, a function may include at least one thread. In the example illustrated in FIG. 2, it is assumed that the function may include three threads. When a command or a request signal instructing to perform the function is provided to a processor, the three threads may be executed. Two or more commands instructing to perform the function may be provided to the processor.

The single processor SP may sequentially process first to third threads 211, 212, and 213 for one function. When a command or the like instructing to perform a function is provided to the single processor SP three times, the single processor SP may sequentially process the first to third threads 211, 212, and 213 and repeat such a processing order two more times. Accordingly, a time required to process the entire function may be from a time t1 to a time t3.

The multi-processors MP1, MP2, and MP3 may process threads for two or more commands in a distributed and parallel manner. For example, the multi-processor MP1 may process one first thread 221 at the time t1, and after the one first thread 221 has been processed, provide, to the multi-processor MP2, a context including end data corresponding to information about a second thread 222. As such, the context being transmitted between processors may be referred to as context switching. After context switching, the multi-processor MP1 may process another first thread 221 and the multi-processor MP2 may process one second thread 222 in parallel with the multi-processor MP1 (e.g., a second A may be processed in parallel with a first B in FIG. 2). After the one second thread 222 has been processed, context switching between the multi-processors MP2 and MP3 may be executed. In a similar manner, the multi-processors MP1, MP2, and MP3 may process first to third threads 221, 222, and 223 in a parallel manner. Accordingly, a time used to process the entire function is from the time t1 to a time t2, which may be relatively shorter than the time used for the single processor SP to process the entire function.

In FIG. 2, the number of multi-processors is only an example and the number of multi-processors is not limited to 3 as shown in FIG. 2. When the context switching is performed between the multi-processors MP1, MP2, and MP3, a time used to transmit the context may be increased, and thus, a time taken for a parallel processing operation may be increased. In this regard, it is advantageous to improve a performance of an apparatus by reducing a time taken for the context switching.

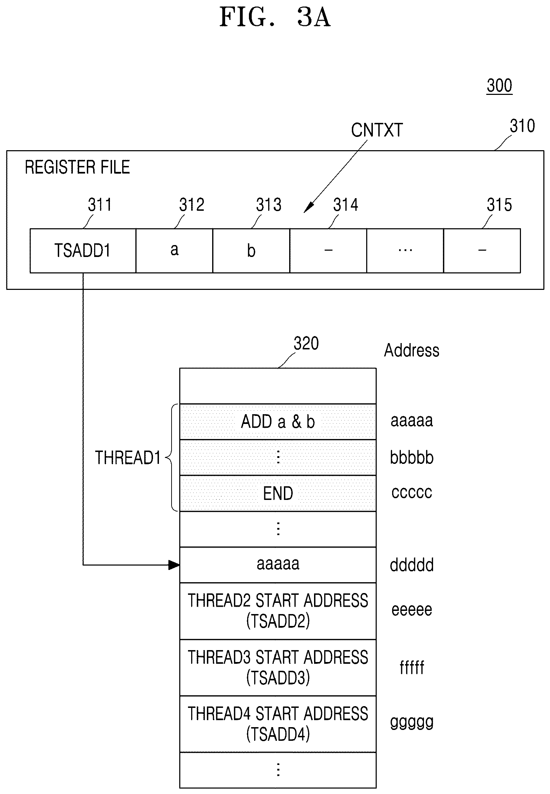

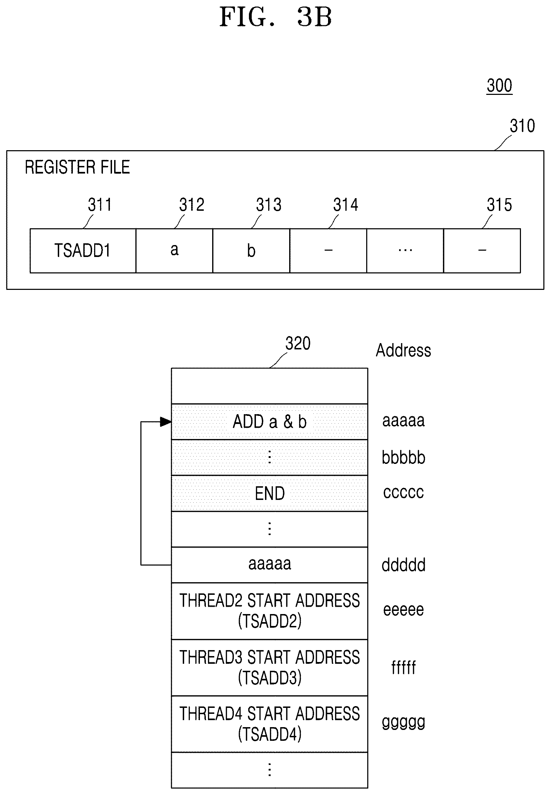

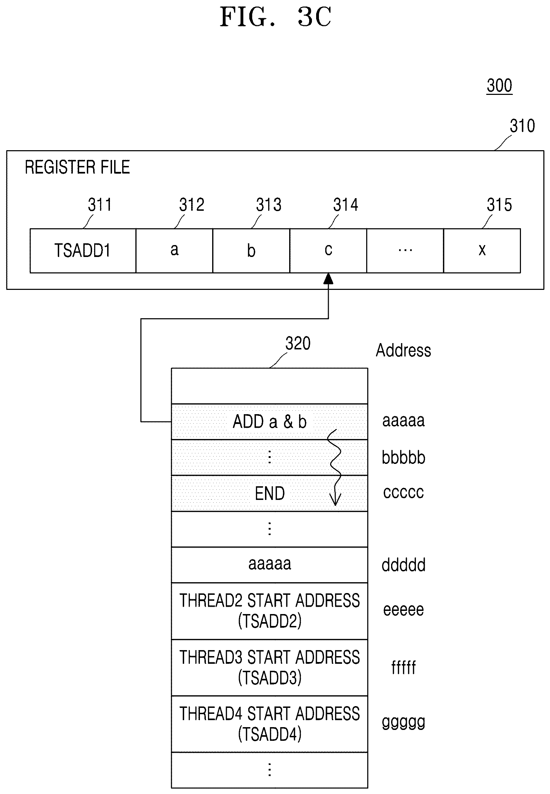

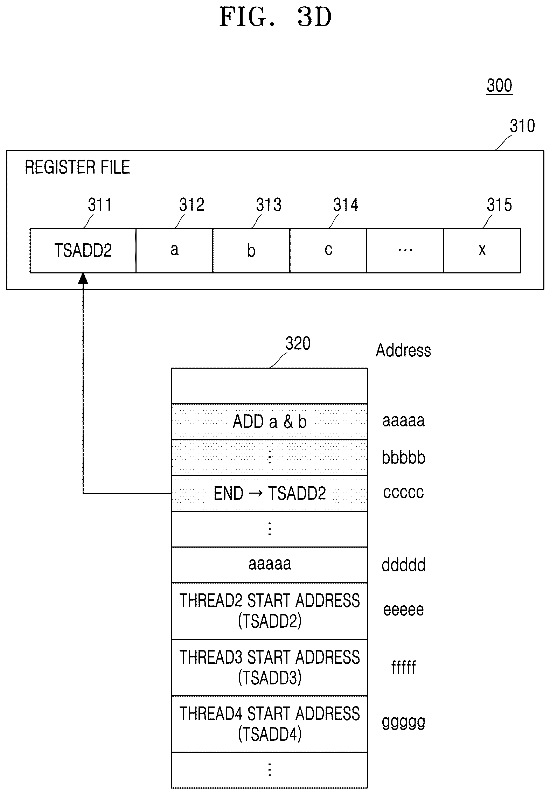

FIGS. 3A, 3B, 3C, and 3D are diagrams for describing an operation in which a processor 300 processes a thread, according to an embodiment. In FIGS. 3A, 3B, 3C, and 3D, an operation of storing a value in a register file 310 and operations of reading and executing an address, instruction data, or the like stored in an instruction memory 320 may be performed by a core of the processor 300, and for convenience, the core is not illustrated in FIGS. 3A, 3B, 3C, and 3D.

Referring to FIGS. 3A, 3B, 3C, and 3D, the register file 310 of the processor 300 may include a plurality of registers 311 to 315 configured to store context CNTXT. The instruction memory 320 of the processor 300 may include a plurality of storage areas. Each storage area may correspond to an address. At least one piece of instruction data related to one thread may be stored in some storage areas of the instruction memory 320, and at least one piece of instruction data related to another thread may be stored in other storage areas of the instruction memory 320. An address of a storage area storing at least one piece of instruction data related to a thread may be stored in a storage area corresponding to a start address of the thread. The core of the processor 300 may be configured to read one or more pieces of instruction data related to a thread, based on a start address of the thread stored in the register file 310. The core of the processor 300 may execute the thread based on the read instruction data and at least one value related to the thread stored in the register file 310.

Referring to FIG. 3A, the context CNTXT may be stored in the register file 310, in synchronization with one cycle of the clock signal CLK of FIG. 1. In an embodiment, the context CNTXT may include a start address of a thread to be processed by the processor 300, and at least one value related to the thread. The start address of the thread may be a specific address corresponding to a specific storage space of the instruction memory 320. The start address of the thread may be referred to as a vector of the thread, an entry point of the thread, or the like. The at least one value related to the thread may include, for example, a value used for an operation, a result value of the operation, and a pointer of a buffer. For example, it is assumed that the start address of the thread to be processed by the processor 300 is a first start address TSADD1 of a first thread Thread1, a value of the first start address TSADD1 of the first thread Thread1 is "ddddd", and values related to the first thread Thread1 include "a" and "b". Values of the context CNTXT may be respectively stored in the plurality of registers 311 to 315. For example, "ddddd" that is the value of the first start address TSADD1 of the first thread Thread1 may be stored in the register 311. A value "a" that is the value related to the first thread Thread1 may be stored in the register 312. A value "b" that is the value related to the first thread Thread1 may be stored in the register 313. In FIG. 3A, it is assumed that the registers 314 to 315 are empty. The core of the processor 300 may start a thread by performing absolute branch on a start address of the thread. For example, the core of the processor 300 may fetch the first start address TSADD1 of the first thread Thread1 stored in the register 311, in synchronization with a cycle of the clock signal CLK of FIG. 1. A storage area corresponding to the address "ddddd" of the instruction memory 320 may store an address of a storage area storing instruction data of the first thread Thread1. For example, it is assumed that a value of the address of the storage area of the instruction memory 320, storing the instruction data of the first thread Thread1 is "aaaaa". The first thread Thread1 may store storage areas corresponding to addresses "aaaaa" to "ccccc" of the instruction memory 320. In an embodiment, storage areas corresponding to addresses "eeeee" to "ggggg" of the instruction memory 320 may store start addresses TSADD2, TSADD3, and TSADD4 of a second thread Thread2, a third thread Thread3, to a fourth thread Thread4 to be respectively processed by different subsequent processors. For example, the first thread Thread1 may indicate write, the second thread Thread2 may indicate read, the third thread Thread3 may indicate flush, and the fourth thread Thread4 may indicate trim. However, embodiments are not limited to these examples. In some embodiments, an instruction memory of a processor other than the processor 300 may omit the start addresses TSADD2, TSADD3, and TSADD4.

Referring to FIG. 3B, the core of the processor 300 may read the storage area corresponding to the address "aaaaa" of the instruction memory 320 and then perform an operation according to the instruction data. For example, it is assumed that the instruction data stored in the storage area corresponding to the address "aaaaa" of the instruction memory 320 includes an instruction to add the value "a" and the value "b". In this case, the value "a" and the value "b" to be used for the instruction may be already stored in the register file 310. Accordingly, the core of the processor 300 may add the value "a" and the value "b" stored in the register file 310.

Referring to FIG. 3C, the core of the processor 300 may be configured to store, in the register file 310, values generated while the first thread Thread1 is executed. For example, the core of the processor 300 may store, in the register 314 of the register file 310, a value "c" obtained by adding the value "a" and the value "b". Then, the core of the processor 300 may increase the address "aaaaa" of the instruction memory 320, read instruction data stored in a storage area corresponding to an address after the address "aaaaa" of the instruction memory 320, for example, the address "bbbbb", and perform an operation according to the instruction data by using values stored in the register file 310. As such, the core of the processor 300 may process the first thread Thread1. It is assumed that a value "x" is stored in the register 315 of the register file 310.

Referring to FIG. 3D, the core of the processor 300 may read an address where an end of the first thread Thread1 is stored, for example, the address "ccccc". In this case, the execution of the first thread Thread1 may be completed and the core of the processor 300 may store, in the register 311 of the register file 310, a second start address TSADD2 of the second thread Thread2 by referring to the instruction memory 320 (e.g., by referring to the address "eeeee" of the instruction memory 320). Here, a value stored in the register 311 may be changed from a value of the first start address TSADD1 to a value of the second start address TSADD2. Values stored in the registers 312 to 315 may be related to the second thread Thread2. The second start address TSADD2 of the second thread Thread2 and the values related to the second thread Thread2 may be transmitted to a subsequent processor as another context, when a subsequent data structure module corresponding to the subsequent processor is empty. The subsequent processor may process a subsequent thread as described above with reference to FIGS. 3A, 3B, 3C, and 3D.

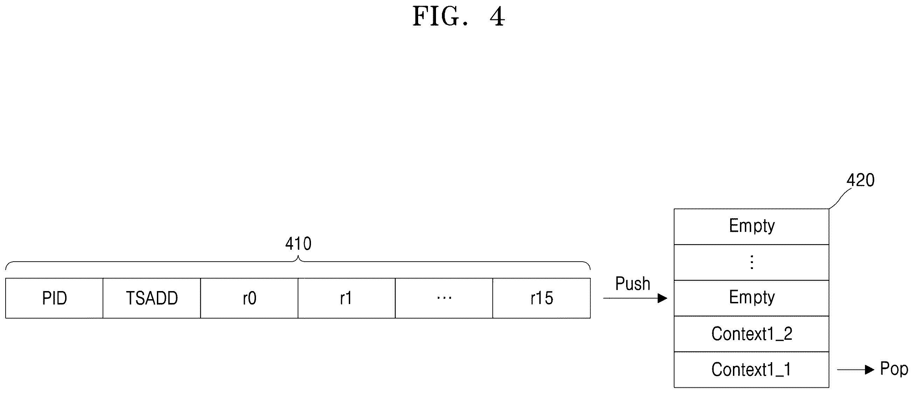

FIG. 4 is a diagram showing examples of a context 410 and a data structure module 420, according to an embodiment.

Referring to FIG. 4, the context 410 may include a start address TSADD of a thread and a plurality of values r0 to r15 related to the thread. In an embodiment, the context 410 may further include a processor identifier PID. The processor identifier PID may include information specifying a processor that is to process the context 410. The processor identifier PID may be generated by the processor.

In an embodiment, the data structure module 420 may be implemented as a queue and when the number of data structure modules 420 is 2 or more, two or more queues may be implemented in the context switch 110 of FIG. 1. The data structure module 420 implemented as a queue may store the context 410 received from the processor corresponding to the processor identifier PID, in synchronization with the clock signal CLK of FIG. 1. For example, when there is an empty space in the data structure module 420, the context 410 may be input to the data structure module 420 and stored in the empty space of the data structure module 420. Here, storing data such as the context 410 in the data structure module 420 may be referred to as pushing the data to the data structure module 420. The data structure module 420 implemented as a queue may output a pre-stored context, in synchronization with the clock signal CLK of FIG. 1. For example, when pieces of contexts Context1_1 and Context1_2 are sequentially stored in the data structure module 420, the pre-stored context Context1_1 may be first output and then the context Context1_2 may be output.

In an embodiment, the data structure module 420 may include a register file. When the number of data structure modules 420 is 2 or more, 2 or more register files may be included in the context switch 110 of FIG. 1.

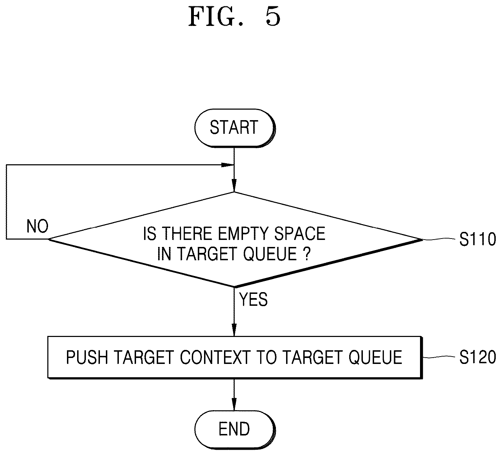

FIG. 5 is a flowchart of storing context in a data structure module, according to an embodiment. For convenience of description, it is assumed that the data structure module is implemented as a queue.

Referring to FIG. 5, it is determined whether there is an empty space in a target queue, in operation S110. The target queue may be a queue assigned to a target processor. The target processor may be a queue assigned to a processor that is to process current context. In some embodiments, the target processor may be a subsequent queue assigned to a subsequent processor of a processor processing the current context. When there is an empty space in the target queue (Yes in operation S110), a target context may be pushed to the target queue, in operation S120. The target context may be input to the target queue and stored in the target queue. When there is no empty space in the target queue (No in operation S110), the process may return to operation S110.

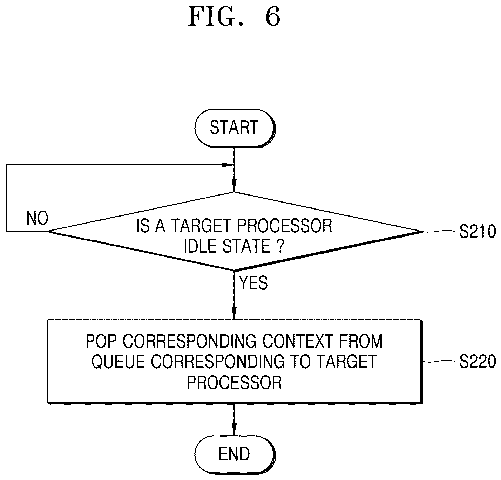

FIG. 6 is a flowchart of outputting context from a data structure module, according to an embodiment.

Referring to FIG. 6, it is determined whether a target processor is in an idle state, in operation S210. When the target processor is in the idle state (Yes in operation S210), corresponding context may be popped from a queue corresponding to the target processor, in operation S220. When the target processor is not in the idle state (No in operation S210), the process may return to operation S210.

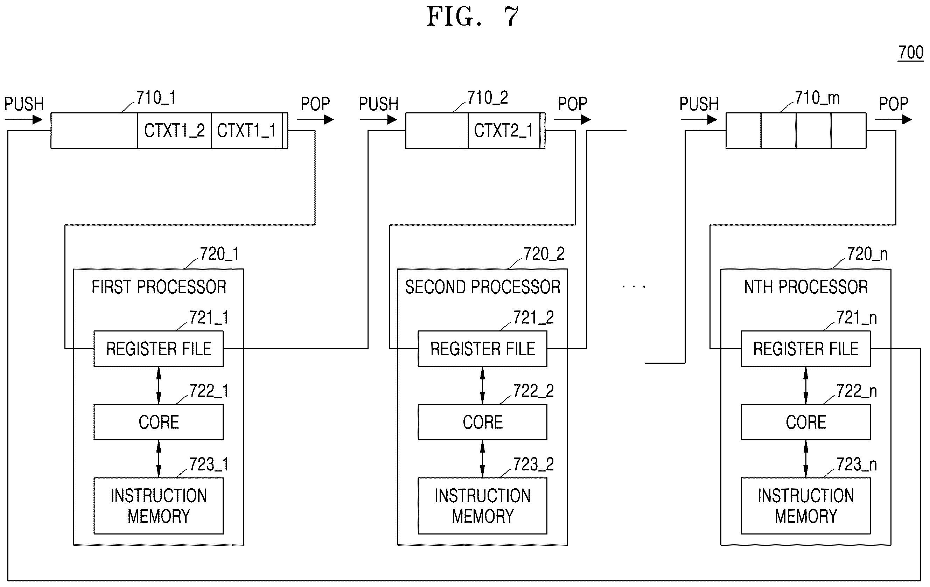

FIG. 7 is a diagram showing examples of a processor and a routed queue, according to an embodiment.

Referring to FIG. 7, in an embodiment, first queue 710_1, second queue 710_2, ..., to mth queue 710_m of a computing device 700 may store context in synchronization with the clock signal CLK of FIG. 1 or output stored context in synchronization with the clock signal CLK of FIG. 1. The first to mth queues 710_1 to 710_m may be examples of the first to mth data structure modules 111_1 to 111_m of FIG. 1.

In the computing device 100, the first to mth queues 710_1 to 710_m and first to nth processors 720_1 to 720_n may be routed in the form of a continuous chain. In other words, according to the routing in the form of a continuous chain, a corresponding queue, a corresponding processor, and a subsequent queue may be routed such that context output from the corresponding queue is stored in a register file of the corresponding processor and such that subsequent context output from the register file of the corresponding processor is stored in the subsequent queue. Processors routed in the form of a continuous chain may process instructions sequentially in an in-order manner.

For example, the first processor 720_1 may be routed with the first and second queues 710_1 and 710_2 such that context popped from the first queue 710_1 is stored in a register file 721_1 of the first processor 720_1 and such that context output from the register file 721_1 of the first processor 720_1 is pushed to the second queue 710_2. In a similar manner, the second processor 720_2 may be routed with the second queue 710_2 and a third queue (not shown). As such, other processors and queues may be routed. The nth processor 720_n may be routed with the mth queue 710_m and the first queue 710_1 such that context output from a register file 721_n of the nth processor 720_n is pushed to the first queue 710_1.

In an embodiment, the first to mth queues 710_1 to 710_m may each be implemented as a register file. For example, the first queue 710_1 may be implemented as a first register file routed with a processor that is to process a first thread to output a first context to the processor, and the second queue 710_2 may be implemented as a second register file routed with the processor that is to process the first thread to receive second context from the processor and routed with a subsequent processor of the processor that is to process the first thread, to output the second context to the subsequent processor. The third to mth queues may also be implemented as routed register files as described above. Each register file according to an embodiment may include a plurality of flip flops configured to operate in response to the clock signal CLK of FIG. 1.

Although not illustrated, in some embodiments, an output unit of a corresponding processor may be additionally routed with an input unit of a corresponding queue such that a context output from a register file of the corresponding processor is also stored in the corresponding queue.

Each of cores 722_1 to 722_n, for example, the core 722_1 may be configured to, in an idle state, load context (e.g., context CTXT1_1) for a thread (e.g., the first thread Thread1 of FIG. 3A) from the corresponding first queue 710_1 to the register file 721_1 in synchronization with the first cycle of the clock signal CLK of FIG. 1. Also, for example, the core 722_1 may be configured to, in an active state, process the thread (e.g., the first thread Thread1 of FIG. 3A) based on the context (e.g., the context CTXT1_1). Also, for example, the core 722_1 may, in an active state, output context (e.g., context CTXT2_1) for a subsequent thread (e.g., the second thread Thread2 of FIG. 3A) to an empty space of a subsequent queue (e.g., the second queue 710_2) corresponding to a subsequent processor (e.g., the core 722_2 of the second processor 720_2) that is to process the subsequent thread. The subsequent processor, e.g., the core 722_2 of the second processor 720_2, may be configured to, in an idle state, load the context (e.g., the context CTXT2_1) from the second queue 710_2 to the register file 721_2, in synchronization with the second cycle of the clock signal CLK of FIG. 1. Also, for example, the core 722_2 may, in an active state, process the thread (e.g., the second thread Thread2 of FIG. 3A) based on the context (e.g., the context CTXT2_1). The core 722_2 may, in the active state, output subsequent context of the context (e.g., the context CTXT2_1) to a queue (e.g., a third queue) corresponding to a subsequent processor (e.g., a third processor) of the second processor 720_2.

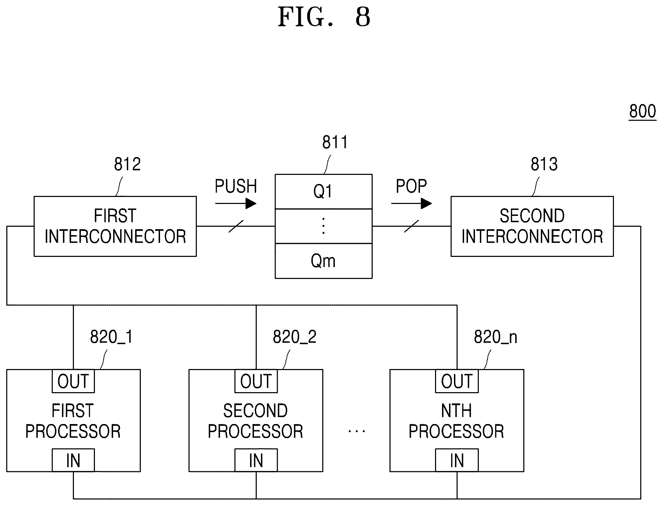

FIG. 8 is a diagram showing other examples of a processor and a routed queue, according to an embodiment.

Referring to FIG. 8, in an embodiment, a computing device 800 may further include a first interconnector 812 and a second interconnector 813. For example, a plurality of queues 811, the first interconnector 812, and the second interconnector 813 may be included in the context switch 110 of FIG. 1, and the plurality of queues 811 may be examples of the first to mth data structure modules 111_1 to 111_m of FIG. 1.

In the computing device 800, a first processor 820_1, a second processor 820_2, ..., to an nth processor 820_n, the plurality of queues 811, the first interconnector 812, and the second interconnector 813 may be routed in the form of a matrix. In other words, according to the routing in the form of a matrix, components (the first to nth processors 820_1 to 820_n, the plurality of queues 811, the first interconnector 812, and the second interconnector 813) of the computing device 800 may be routed such that the first to nth processors 820_1 to 820_n output pieces of context to the first interconnector 812, such that the first interconnector 812 selects a queue to store context among the plurality of queues 811, and such that the second interconnector 813 provides pieces of context received from the plurality of queues 811 to the first to nth processors 820_1 to 820_n.

For example, the first interconnector 812 may be routed with output terminals (see "OUT" of FIG. 8) of the first to nth processors 820_1 to 820_n. Also, the first interconnector 812 may be routed with the plurality of queues 811. The second interconnector 813 may be routed with input terminals (see "IN" of FIG. 8) of the first to nth processors 820_1 to 820_n. Also, the second interconnector 813 may be routed with the plurality of queues 811. Processors routed in the form of a matrix may process instructions in an out-of-order manner.

In an embodiment, for the routing in the form of a matrix, context may further include the processor identifier PID described above with reference to FIG. 4. The first interconnector 812 may select a queue to store context among the plurality of queues 811, based on the processor identifier PID of the context. The first interconnector 812 may provide the context to the selected queue. The second interconnector 813 may receive context from one of the plurality of queues 811. The second interconnector 813 may provide context to a processor corresponding to the processor identifier PID among the first to nth processors 820_1 to 820_n, based on the processor identifier PID of the context.

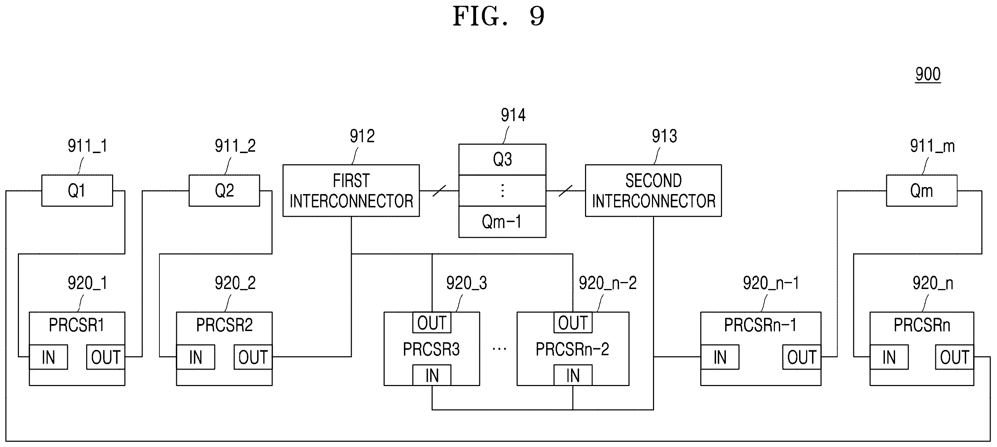

FIG. 9 is a diagram showing other examples of a processor and a routed queue, according to an embodiment. Descriptions of the embodiment illustrated in FIG. 9, which overlap those described above with reference to FIGS. 7 and 8, will be omitted for conciseness.

Referring to FIG. 9, a computing device 900 may include a first queue (Q1) 911_1, a second queue (Q2) 911_2, third (Q3) to (m-1)th (Qm-1) queues 914, an mth queue (Qm) 911_m, a first interconnector 912, a second interconnector 913, and a first processor (PRCSR1) 920_1, a second processor (PRCSR2) 920_2, a third processor (PRCSR3) 920_3, an n-2th processor (PRCSRn-2) 920_n-2, an n-1th processor (PRCSRn-1) 920_n-1, to an nth processor (PRCSRn) 920_n. In an embodiment, the first queue 911_1, the second queue 911_2, the third to (m-1)th queues 914, the mth queue 911_m, and the first and second interconnectors 912 and 913 may be included in the context switch 110 of FIG. 1.

In an embodiment, components (the first to mth queues 911_1 to 911_m, the first and second interconnectors 912 and 913, and first to nth processors 920_1 to 920_n) of the computing device 900 may be routed in a hybrid from of a continuous chain and a matrix.

When threads have dependency on each other, some components may be routed in the form of a continuous chain. For example, the first and second queues 911_1 and 911_2 and the first and second processors 920_1 and 920_2 may be routed in the form of a continuous chain as described above with reference to FIG. 7. Also, the mth queue 911_m and the (n-1)th and nth processors 920_n-1 to 920_n may be routed in the form of a continuous chain. In this case, some processors routed in the hybrid form may process instructions sequentially in an in-order manner.

When thread have independency from each other, some components may be routed in the form of a matrix. For example, an output terminal of the second processor 920_2, the third to (n-2)th processors 920_3 to 920_n-2, the first and second interconnectors 912 and 913, the third to (m-1)th queues 914, and an input terminal of the (n-1)th processor 920_n-1 may be routed in the form of a matrix as described above with reference to FIG. 8. Other processors routed in the hybrid form may process instructions in an out-of-order manner.

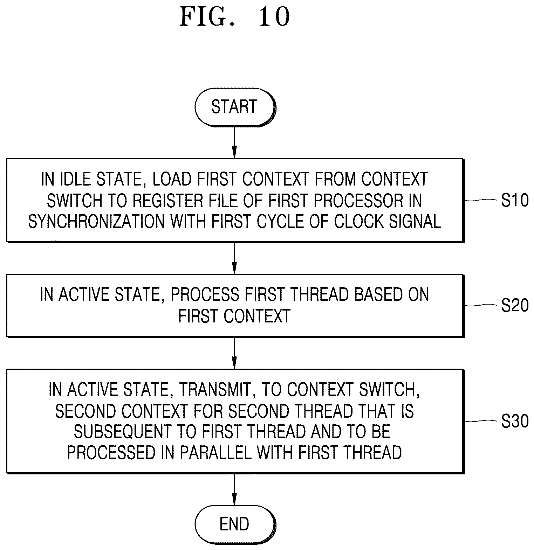

FIG. 10 is a flowchart for describing an operating method of a computing device, according to an embodiment.

Referring to FIGS. 1 and 10, in an idle state, the first context may be loaded from the context switch 110 to the register file 121_1 of the first processor 120_1, in synchronization with the first cycle of the clock signal CLK (operation S10). In operation S10, the first context may include the first start address of the first thread and the at least one value related to the first thread. The first context may further include an identifier of the first processor 120_1. Here, the first thread, the first context, and the first processor 120_1 receiving the first context are for distinguishing one component from another component. Operation S10 may be the same as details described above with reference to FIGS. 3A and 6.

In an active state, the first thread may be processed based on the first context (operation S20). Operation S20 may be the same as details described above with reference to FIGS. 3B to 3D.

In the active state, the second context may be transmitted to the context switch (operation S30). The second context may be context for the second thread and the second thread may be a thread that is subsequent to the first thread and to be processed in parallel with the first thread. Operation S30 may be the same as details described above with reference to FIGS. 3D and 5. Here, the second thread and the second context are for distinguishing one component from another component.

In an embodiment, operation S10 may include outputting the first context (e.g., the context CTXT1_1) stored in the first queue 710_1, in synchronization with the first cycle of the clock signal CLK of FIG. 1, and storing the first context in the register file 721_1 of the first processor 720_1.

In an embodiment, operation S30 may include, after the processing of the first thread is completed, storing the second context (e.g., the context CTXT2_1) in the register file 721_1 of the first processor 720_1, and transmitting the second context from the register file 721_1 of the first processor 720_1 to the first queue 710_1.

In an embodiment, the second context (e.g., the context CTXT2_1) may include an identifier of the second processor 820_2. Operation S30 may include storing the second context (e.g., the context CTXT2_1) in the register file of the first processor 820_1, transmitting the second context from the first processor 820_1 to the first interconnector 812, selecting a second queue corresponding to the second processor 820_2, among the plurality of queues 811, based on the identifier of the second processor 820_2, and storing the second context in the second queue. The second processor 820_2 is only an example.

In an embodiment, the first context may include an identifier of the first processor 820_1. Operation 10 may include transmitting the first context from the first queue ("Q1" shown in FIG. 8) among the plurality of queues 811 to the second interconnector 813, and transmitting the first context to the first processor 820_1, based on the identifier of the first processor 820_1.

In an embodiment, the operating method of the computing device 100 may further include, in the idle state, loading the second context from the context switch 110 to the second processor 120_2, in synchronization with the second cycle of the clock signal CLK, in the active state, processing the second thread based on the second context, and in the active state, transmitting third context for a third thread from the second processor 120_2 to the context switch 110. Here, the third thread may be a thread that is subsequent to the second thread and to be processed in parallel with the second thread.

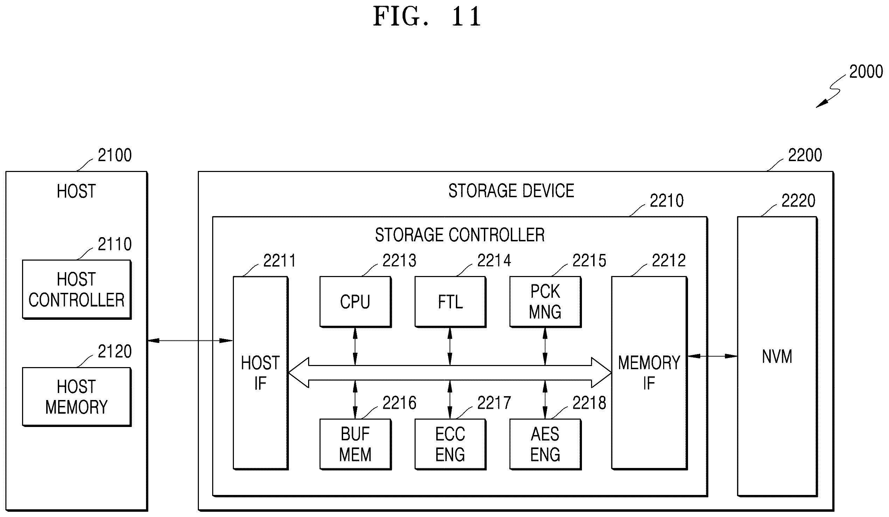

FIG. 11 is a block diagram of a host-storage system 2000 according to an embodiment.

Referring to FIG. 11, the host-storage system 2000 may include a host 2100 and a storage device 2200.

The host 2100 may include a host controller 2110 and a host memory 2120.

The host controller 2110 may manage an operation of storing data in a nonvolatile memory (NVM) 2220 or storing data of the NVM 2220 in a buffer area. In an embodiment, the host controller 2110 may be configured to output a request signal requesting that an operation corresponding to a thread be performed. For example, the thread included in the request signal may indicate writing data of a specific size. However, embodiments are not limited to these examples.

The host memory 2120 may function as a buffer memory for temporarily storing data to be transmitted to the storage device 2200 or data transmitted from the storage device 2200.

The storage device 2200 may include storage media for storing data according to a request from the host 2100. For example, the storage device 2200 may be implemented as at least one of a solid-state driver (SSD), an embedded memory, or a detachable external memory.

In an embodiment, the storage device 2200 may be configured to perform an operation based on the request signal. The storage device 2200 may include a storage controller 2210 and the NVM 2220.

The storage controller 2210 may include a host interface (I/F) 2211, a memory interface (I/F) 2212, a central processing unit (CPU) 2213, a flash translation layer (FTL) 2214, a packet manager (PCK MNG) 2215, a buffer memory (BUF MEM) 2216, an error correction code (ECC) engine (ENG) 2217, and an advanced encryption standard (AES) engine (ENG) 2218.

The embodiments described above with reference to FIGS. 1 to 10 may be applied to the storage controller 2210. In embodiments, the computing device 100 of FIG. 1 may be implemented as the host interface (I/F) 2211, the memory interface (I/F) 2212, the CPU 2213, the FTL 2214, the packet manager 2215, the buffer memory 2216, the ECC engine 2217, and/or the AES engine 2218.

The host interface 2211 may transmit/receive a packet to/from the host 2100. The packet transmitted to the host interface 2211 may include a command, or data to be recorded on the NVM 2220. The packet transmitted to the host 2100 may include a response to the command or data read from the NVM 2220.

The memory interface (I/F) 2212 may transmit data to be recorded on the NVM 2220 to the NVM 2220 or may receive data read from the NVM 2220.

The CPU 2213 may control operations of recording and reading data for the NVM 2220 according to execution of the FTL 2214.

The FTL 2214 may perform various functions such as address mapping, wear-leveling, and garbage collection.

The packet manager (PCK MNG) 2215 may generate a packet according to a protocol of an interface agreed with the host 2100 or parse various types of information from the packet received from the host 2100.

The buffer memory (BUF MEM) 2216 may temporarily store data to be recorded on the NVM 2220 or data to be read from the NVM 2220.

The ECC engine (ENG) 2217 may perform error detection and correction functions on data read from the NVM 2220.

The AES engine (ENG) 2218 may perform, by using a symmetric-key algorithm, at least one of encryption and decryption on data input to the storage controller 2210.

It is apparent to one of ordinary skill in the art that a structure of the computing device may be variously modified or changed without departing from the scope or technical ideas of the present disclosure. If modifications and changes of various embodiments are within the scope of the appended claims and equivalents thereof, the present disclosure is deemed to include the modifications and changes of the various embodiments.

In the present specification, although the embodiments have been described by using specific terms, the terms are used only for descriptive purposes and are not intended to limit the meanings or scope of the claims. Therefore, it will be understood by one of ordinary skill in the art that other modifications and equivalents may be made therein. Accordingly, the scope of the present disclosure will be defined by the appended claims.

## Claims

1. A computing device comprising:
a context switch (110) including a plurality of data structure modules (111) to store context including a start address of a thread and at least one value related to the thread; and
a plurality of processors (120),
wherein the plurality of processors (120) are configured to:
in an idle state, load a first context for a first thread from a corresponding data structure module (111_1) among the plurality of data structure modules (111), in synchronization with a first cycle of a clock signal (CLK);
in an active state, process the first thread based on the first context; and
in the active state, provide a second context for a second thread that is subsequent to the first thread and that is to be processed in parallel with the first thread to the context switch (110), to store the second context in a subsequent data structure module (111_2) among the plurality of data structure modules (111) in the context switch (110), the subsequent data structure module (111_2) corresponding to a subsequent processor (120_2) that is to process the second thread.

2. The computing device of claim 1, wherein the plurality of processors (120) each comprise:
an instruction memory (123) including a plurality of storage areas and configured to store, in a first storage area corresponding to a first start address of the first thread, an address of a second storage area that stores first instruction data related to the first thread;
a register file (121) including a plurality of registers (311 - 315) configured to store the first context; and
a core (122) configured to, based on the first start address stored in the register file (121), read the first instruction data, the core being configured to execute the first thread, based on the first instruction data and at least one value related to the first thread that is stored in the register file (121).

3. The computing device of claim 2, wherein the core is configured to:
store, in the register file (121), values generated while the first thread is being executed;
when execution of the first thread is completed, store, in the register file (121), a second start address of the second thread and at least one value related to the second thread; and
output the second context to the context switch (110) to store, in an empty storage space in the subsequent data structure module of the context switch (110), the second context that is stored in the register file (121).

4. The computing device of claim 1, 2 or 3, wherein the plurality of data structure modules (111) each comprise a plurality of queues (710) configured to store the context received from the plurality of processors (120) and output a pre-stored context in synchronization with the clock signal (CLK).

5. The computing device of any one of claims 1 to 4, wherein the plurality of data structure modules (111) each comprise:
a first register file (710_1) routed to a processor (120) that is to process the first thread among the plurality of processors (120), to output the first context to the processor; and
a second register file (710_2) routed to the processor (120) to receive the second context from the processor (120) and routed to the subsequent processor (120) to output the second context to the subsequent processor (120).

6. The computing device of claim 5, wherein each of the first register file (121) and the second register file (121) comprises a plurality of flip flops configured to operate in response to the clock signal (CLK).

7. The computing device of any one of claims 1 to 6, wherein each context further comprises an identifier of a processor (820), and
the context switch (110) further comprises:
a first interconnector (812) that is routed to the plurality of data structure modules (811) and that is routed to output terminals of the plurality of processors (820), to provide the context to a first data structure module (Q1) selected from among the plurality of data structure modules (811) in the context switch (110), based on the identifier; and
a second interconnector (813) that is routed to the plurality of data structure modules (811) and that is routed to input terminals of the plurality of processors (820), to provide the context to a processor (820) selected from among the plurality of processors (820), based on the identifier received from a second data structure module (Q2) among the plurality of data structure modules (811) in the context switch (110).

8. The computing device of any one of claims 1 to 7, wherein the context further comprises an identifier of a processor ,
the plurality of data structure modules (911_1, 911_2, 914) comprise a first data structure module (911_1), a second data structure module (911_2), at least two third data structure modules (914), and a fourth data structure module (911_m),
the context switch (110) further comprises a first interconnector and a second interconnector, which are routed to the at least two third data structure modules (111), and
the plurality of processors (120) comprise:
a first processor (920_1) routed to the first data structure module (911_1) and the second data structure module (911_2),
a second processor (920_2) routed to the second data structure module (911_2) and the first interconnector (912),
at least two third processors (920_3), routed to the first interconnector (912) and the second interconnector (913),
a fourth processor (920_n-1) routed to the second interconnector (913) and the fourth data structure module (911_m), and
a fifth processor (920_n) routed to the first data structure module (911_1) and the fourth data structure module (911_m).

9. The computing device of any one of claims 1 to 8, wherein the subsequent processor (120_2) is configured to:
in the idle state, load the second context from the subsequent data structure module (111_2) in synchronization with a second cycle of the clock signal (CLK); and
in the active state, process the second thread based on the second context.

10. An operating method of a computing device, the operating method comprising:
in an idle state, loading, from a context switch (110) to a first processor (120_1), a first context including a first start address of a first thread and at least one value related to the first thread, in synchronization with a first cycle of a clock signal (CLK);
in an active state, processing the first thread based on the first context; and
in the active state, transmitting, from the first processor (120_1) to the context switch (110), a second context for a second thread that is subsequent to the first thread and that is to be processed in parallel with the first thread.

11. The operating method of claim 10, wherein loading the first context comprises:
outputting the first context stored in a first queue of the context switch (110), in synchronization with the first cycle of the clock signal (CLK); and
storing the first context in a register file (121) of the first processor (120_1).

12. The operating method of claim 10 or 11, wherein transmitting the second context comprises:
after the processing of the first thread is completed, storing the second context in a register file (121) of the first processor (120_1); and
transmitting the second context from the register file (121_1) to a second queue of the context switch (110).

13. The operating method of claim 10, 11 or 12, wherein the second context comprises an identifier of a second processor (120_2), and
transmitting the second context comprises:
after the processing of the first thread is completed, storing the second context in a register file (121_1) of the first processor (120_1);
transmitting the second context from the register file (121_1) to a first interconnector (812) of the context switch (110);
selecting, based on the identifier of the second processor (120_2), a second queue among a plurality of queues of the context switch (110), the second queue corresponding to the second processor (120_2); and
storing the second context in the second queue.

14. The operating method of any one of claims 10 to 13, wherein the first context comprises an identifier of the first processor (120_1), and
loading the first context comprises:
transmitting the first context from a first queue among a plurality of queues of the context switch (110) to a second interconnector (813) of the context switch (110); and
transmitting, based on the identifier of the first processor (120_1), the first context to the first processor (120_1).

15. The operating method of any one of claims 10 to 14, further comprising:
in the idle state, loading the second context from the context switch (110) to a second processor (120_2), in synchronization with a second cycle of the clock signal (CLK);
in the active state, processing the second thread based on the second context; and
in the active state, transmitting, from the second processor (120_2) to the context switch (110), third context for a third thread that is subsequent to the second thread and that is to be processed in parallel with the second thread.
